# EUROPÄISCHE PATENTSCHRIFT

(11) **EP 2 847 581 B1**
(45) Veröffentlichungstag und Bekanntmachung des Hinweises auf die Patenterteilung: **03.07.2019**
(21) Anmeldenummer: 13713374.0
(22) Anmeldetag: 15.03.2013
(51) Int. Cl.: G01N 27/407, H01R 13/52, G01M 15/10, H02G 15/00, H02G 15/23, B29C 70/84, B29L 31/34, B29K 105/00, B29K 27/12, B29L 9/00

(54) **ABGEDICHTETE KABELDURCHFÜHRUNG FÜR EINEN ABGASSENSOR**
SEALED GROMMET FOR AN EXHAUST SENSOR
PASSE-FIL ÉTANCHE POUR UN CAPTEUR DE GAZ D'ÉCHAPPEMENT

(30) Priorität: 09.05.2012 DE 102012207762
(43) Veröffentlichungstag der Anmeldung: 18.03.2015
(73) Patentinhaber: Robert Bosch GmbH, 70442 Stuttgart (DE)
(72) Erfinder: WINKLER, Peter, 71229 Leonberg (DE); MAIER, Rainer, 71732 Tamm (DE); OPP, Andreas, 71277 Rutesheim (DE); RATTAY, Bernd, 71254 Ditzingen (DE); SCHNEIDER, Jens, 71229 Leonberg (DE); SOYEZ, Guido, 71636 Ludwigsburg (DE); STIER, Joachim, 75378 Bad Liebenzell (DE); KLENNER, Axel, 71263 Weil Der Stadt (DE)
(86) Internationale Anmeldenummer: PCT/EP2013/055437
(87) Internationale Veröffentlichungsnummer: WO 2013/167301

(56) Entgegenhaltungen:
- EP-A1- 0 702 229
- DE-U1- 9 410 070
- JP-A- H 063 319
- JP-A- H11 190 717
- JP-A- 2001 103 645
- JP-A- 2005 134 299

## Beschreibung

### Stand der Technik

Die Erfindung geht aus von einem Abgassensor. Derartige Abgassensoren umfassen einen Gehäusekörper, in dem sich ein beispielsweise keramisches, elektrochemisch arbeitendes Sensorelement befindet. Derartige Abgassensoren umfassen ferner einen mit dem Gehäusekörper zum Beispiel verschweißten Kabelabgang, der den Gehäusekörper abdichtet und das Sensorelement elektrisch kontaktiert. Der Kabelabgang weist eine beispielsweise metallische Schutzhülse und ein oder mehrere aus der Schutzhülse herausgeführte Anschlusskabel auf.

An den Kabelabgang und an sein Zusammenwirken mit dem Gehäusekörper des Abgassensors richtet sich zum einen die Anforderung einer hohen Dichtheit. Durch die hohe Dichtheit wird das Eindringen von schädlichen, beispielsweise Korrosion auslösenden, Flüssigkeiten und Gasen in das Innere des Abgassensors wirkungsvoll und dauerhaft unterbunden. Zur Realisierung der Dichtheit wird von dem Kabelabgang insbesondere gefordert, dass er eine ausreichend dichte, dauerhafte und temperaturbeständige Abdichtung zwischen Schutzhülse und den Anschlusskabeln aufweist.

Aus der DE 10 2005 020 793 A1 ist bereits bekannt, einen vorgefertigten Stopfen aus dem auch als PTFE bekannten Polytetrafluorethylen zum Verschließen einer Stirnseite der Schutzhülse eines Abgassensors vorzusehen. Es wird ferner vorgeschlagen, in Durchgangskanälen dieses Stopfens Isoliermäntel von Anschlusskabeln mit fluorhaltigem Kunststoff zu verschweißen und eine kraftschlüssige Abdichtung zwischen der Schutzhülse und dem Stopfen mit einem Schlauch aus fluorhaltigem Kunststoff vorzusehen.

Die Abdichtung im Bereich der Schutzhülse bei dem aus dem Stand der Technik bekannten Sensor erfordert die Handhabung einer Vielzahl diskreter, vorgeformter Bauteile aus unterschiedlichen Materialien. Dies macht den Herstellungsprozess vergleichsweise aufwendig.

Weitere Kabeldurchführungen sind aus der EP 0702 229 A1, der JP H11 190717 A, der JP 2005124299 A, der DE9410070 U1 und der JP 2001103645 A bekannt.

### Vorteile der Erfindung

Erfindungsgemäße Abgassensoren und erfindungsgemäße Kabeldurchführungen sind hingegen vergleichsweise einfach zu fertigen und überaus. Die erfindungsgemäßen Abgassensoren und Kabeldurchführungen werden durch beigefügten Ansprüche definiert. Erfindungsgemäß ist eine Kabeldurchführung für einen Abgassensor vorgesehen. Unter einem Abgassensor ist vorliegend insbesondere eine Lambdasonde zum Einsatz im Abgastrakt eines Brenners oder einer Brennkraftmaschine zu verstehen, jedoch kann es sich auch um andere Sensoren, wie einen Temperatursensor oder um einen NOx- oder Russpartikelsensor oder dergleichen, handeln sowie um Sensoren, die für einen Dauereinsatz bei hohen Temperaturen und/oder in aggressiver Umgebung vorgesehen sind, und solche Sensoren, bei denen eine beispielsweise elektrische Anschlussleitung aus einem abzudichtenden Gehäuse, insbesondere bei vergleichsweise hohen Umgebungstemperaturen, zum Beispiel bei bis zu 260°C, herauszuführen ist. Insbesondere ist unter einem Abgassensor eine zur Montage in einem Abgastrakt eines Brenners und/oder einer Brennkraftmaschine vorgesehene, zum Beispiel dort einschraubbare, Vorrichtung zu verstehen.

Die erfindungsgemäße Kabeldurchführung weist eine Schutzhülse auf. Hierbei handelt es sich insbesondere um ein einseitig oder zweiseitig offenes Rohr, insbesondere mit axialer Symmetrie. Auch kleinere Abweichungen von einer axialen Symmetrie, wie Formungenauigkeiten und/oder kleinere konstruktive Details sind möglich, so dass auch in diesem Fall hinsichtlich der Grundform der Schutzhülse noch von einer axialen Symmetrie beziehungsweise von einer axialen Geometrie ausgegangen werde kann. Auch im Übrigen ist eine Achse des Sensors durch die Hülsenform der Schutzhülse vorgegeben und die resultierende Terminologie (axial, lateral usw.) wird im Rahmen der vorliegenden Anmeldung verwendet.

Beispielsweise kann es sich bei der Schutzhülse um ein tiefgezogenes Teil handeln, beispielsweise kann es sich um ein Teil mit einer Wandstärke von einem Millimeter oder darunter handeln. Erfindungsgemäß handelt es sich um eine metallische Schutzhülse, beispielsweise aus rostfreiem Stahl. Unterschiedliche Ausführungsformen der Schutzhülse sind grundsätzlich möglich, beispielsweise die Vorsehung von axial hintereinander angeordneten Abschnitte mit voneinander verschiedenen, insbesondere sich verjüngenden, Querschnitten und/oder zwischen diesen Abschnitten angeordneten Absätzen und ähnliches.

Die erfindungsgemäße Kabeldurchführung weist ferner zumindest ein, also ein oder mehrere, Anschlusskabel auf. Hierbei kann es sich insbesondere um zwei, drei, vier, fünf oder sechs Anschlusskabel handeln. Auch eine andere Anzahl von Anschlusskabeln, wie beispielsweise sieben Anschlusskabel, ist grundsätzlich möglich und vorliegend nur aus Gründen einer knappen Darstellung nicht explizit aufgeführt.

Wenngleich der Begriff Anschlusskabel vorliegend nicht übermäßig einschränkend verstanden werden soll, ist doch bevorzugt, dass das Anschlusskabel einen metallischen elektrischen Leiter, beispielsweise aus Kupferlitze oder Stahl-Kupferlitze, umfasst. Ferner ist insbesondere vorgesehen, dass das Anschlusskabel beziehungsweise der metallische elektrische Leiter ganz oder teilweise von einer Isolierung umgeben ist, insbesondere ganz oder teilweise in dem Bereich, in dem das Anschlusskabel mit dem thermoplastisch verarbeitbaren, fluorpolymerhaltigen Material in Kontakt ist, und/oder in dem Bereich, in dem das Anschlusskabel auf zumindest einer Stirnseite der Schutzhülse aus der Schutzhülse herausgeführt ist. Insbesondere weist das Anschlusskabel eine Isolierung aus Polytetrafluorethylen (PTFE) auf, das eine sehr hohe Temperaturbeständigkeit aufweist. Auch andere hoch temperaturbeständige Isolierungen sind möglich. Im Fall mehrerer Anschlusskabel können diese voneinander diskret sein oder, beispielsweise durch eine gemeinsame Isolierung, gebündelt und/oder relativ zueinander fixiert sein. Insbesondere kann im Fall mehrerer Anschlussleitungen, die beispielsweise eine Isolierung aus Polytetrafluorethylen (PTFE) aufweisen, vorgesehen sein, dass die Anschlusskabel durch das erfindungsgemäß vorgesehene, thermoplastisch verarbeitbare, fluorpolymerhaltige Material voneinander beabstandet sind.

Erfindungsgemäß ist vorgesehen, dass das Anschlusskabel oder, im Fall mehrerer Anschlusskabel, die Anschlusskabel auf einer Stirnseite der Schutzhülse aus der Schutzhülse herausgeführt ist/sind. Insbesondere verbleibt hierbei ein Raum zwischen der Schutzhülse und dem/den Anschlusskabel/Anschlusskabeln, also ein Raum im Inneren der Schutzhülse, der von den Anschlusskabeln nicht ausgefüllt ist. Wenngleich dieser Raum hinsichtlich seiner Gestalt nicht grundsätzlich eingeschränkt ist, so ist es doch denkbar, dass er die sich zwischen der Anschlussleitung oder den Anschlussleitungen und der Schutzhülse ausbildenden Spalte umfasst und, im Fall mehrerer Anschlussleitungen, zusätzlich die sich zwischen den Anschlussleitungen eventuell ausbildenden Spalte. Insbesondere kann der Raum zwischen der Schutzhülse und dem/den Anschlusskabel/Anschlusskabeln durch die Gesamtheit der genannten Spalte gebildet werden. Spalte mit einer Breite von mindestens 0,25mm sind bevorzugt, da in sie ein thermoplastisch verarbeitbares, fluorpolymerhaltiges Material, insbesondere aufgeschmolzen, leicht einbringbar ist. So kann beispielsweise aufgeschmolzenes, thermoplastisch verarbeitbares Material in solche Spalte leicht hineinfließen und/oder hineingespritzt werden. In ganz besonderem Maße ist dies bei Spalten mit einer Breite von mindestens 0,6mm der Fall. Spalte mit einer Breite von höchstens 0,4mm sind anderseits bevorzugt, da auf diese Weise die Menge des einzubringenden thermoplastisch verarbeitbaren, fluorpolymerhaltigen Materials bzw. die abzudichtende Querschnittsfläche nicht zu groß und damit nicht mechanisch instabil beziehungsweise anfällig wird. Insbesondere ist eine Anhaftung des aufgeschmolzenen, thermoplastisch verarbeitbaren Materials in derartig engen Spalten gewährleistet, die ein Wegfließen des aufgeschmolzenen, thermoplastisch verarbeitbaren, fluorpolymerhaltigen Materials von seinem Bestimmungsort verhindern. In ganz besonderem Maße ist dies bei Spalten mit einer Breite von höchstens 1,25mm der Fall.

Die Anschlusskabel berühren sich innerhalb der Kabeldurchführung und/oder entlang der axialen Erstreckung des von dem thermoplastisch verarbeitbaren, fluorpolymerhaltigen Material ausgefüllten Querschnitts insbesondere nicht.

Es ist wesentlich für die vorliegende Erfindung, dass zumindest ein Querschnitt des sich zwischen der Schutzhülse und dem zumindest einen Anschlusskabel befindlichen Raums mit einem thermoplastisch verarbeitbaren, fluorpolymerhaltigen Material ausgefüllt ist. Unter einem Querschnitt ist hierbei insbesondere eine Fläche parallel zu der mindestens einen Stirnseite der Schutzhülse gemeint, insbesondere im Bereich dieser Stirnseite, also insbesondere im der Stirnseite zugewandten Drittel der Schutzhülse. Auch die Stirnseite, bzw. die stirnseitige Öffnung der Schutzhülse selbst, kommt für den Querschnitt insbesondere in Betracht.

Andererseits kann dieser Querschnitt aber auch insbesondere in einer Fläche liegen, die senkrecht zu der Längsachse der Schutzhülse ist oder gegen diese Achse um nicht mehr als 30°, bevorzugt um nicht mehr als 10°, verkippt ist.

Wenngleich das Wesen der Erfindung bereits in dem Ausfüllen eines gleichsam nur flächenhaften Querschnitts des sich zwischen der Schutzhülse und dem zumindest einen Anschlusskabel befindlichen Raums mit einem thermoplastisch verarbeitbaren, fluorpolymerhaltigen Material grundsätzlich zum Ausdruck kommt, wird in Weiterbildungen der Erfindung eine besonders gute Dichtwirkung dadurch erreicht, dass der mit einem thermoplastisch verarbeitbaren, fluorpolymerhaltigen Material ausgefüllte Bereich des sich zwischen der Schutzhülse und dem zumindest einen Anschlusskabel befindlichen Raums ein Stück, zum Beispiel mindestens 0,5 oder mindestens 2,5 Millimeter, bevorzugt sogar mindestens 5 oder 7 Millimeter, in axialer Richtung, also insbesondere entlang des mindestens einen Anschlusskabels, erstreckt. Der Begriff Querschnitt kann innerhalb der vorliegenden Anmeldung stets in diesem Sinne weitergebildet werden.

Der Querschnitt des sich zwischen der Schutzhülse und dem zumindest einen Anschlusskabel befindlichen Raums kann insbesondere als in einer Ebene liegend ausgebildet sein. Aber auch Querschnitte, die nicht komplett innerhalb einer einzigen Ebene liegen, sondern beispielsweise gewölbt sind, sind von der Erfindung umfasst. Querschnitte im Sinne der Erfindung sind insbesondere auch beliebige Flächen, die den sich zwischen der Schutzhülse und dem zumindest einen Anschlusskabel befindlichen Raums in zwei zumindest gedachte, disjunkte Teilräume zerlegen, von denen der eine, ausgehend von dieser Fläche, der Stirnseite des Schutzrohrs zugewandt und der andere der Stirnseite des Schutzrohrs abgewandt ist.

Unter Ausfüllen eines Querschnitts des sich zwischen der Schutzhülse und dem zumindest einen Anschlusskabel befindlichen Raums mit einem thermoplastisch verarbeitbaren, fluorpolymerhaltigen Material ist insbesondere gemeint, dass die entlang dieses Querschnitts zwischen dem Anschlusskabel oder den Anschlusskabeln und der Schutzhülse verbleibenden Spalte und, im Fall mehrerer Anschlussleitungen, zusätzlich die sich zwischen den Anschlussleitungen eventuell ausbildenden Spalte, mit dem thermoplastisch verarbeitbaren, fluorpolymerhaltigen Material zumindest makroskopisch vollständig ausgefüllt werden.

Sollte das thermoplastisch verarbeitbare, fluorpolymerhaltige Material Poren auf mikroskopischer Größenskala aufweisen, bleiben diese selbstredend für die Auslegung des Begriffes "Ausfüllen" unberücksichtigt.

Wenngleich theoretisch eine Vielzahl fluorpolymerhaltiger Materialien zur Anwendung kommen könnten, um einen Querschnitt des sich zwischen der Schutzhülse und dem zumindest einen Anschlusskabel befindlichen Raums auszufüllen, sind erfindungsgemäß zu diesem Zweck ausschließlich thermoplastisch verarbeitbare Stoffe vorgesehen. Polytetrafluorethylen (PTFE) gehört nicht zu den thermoplastisch verarbeitbaren Stoffen, da es sich bereits unterhalb seiner (fiktiven) Schmelztemperatur, also bereits im festen Zustand, ab Erreichen der Zersetzungstemperatur, chemisch zersetzt. Insbesondere scheiden auch Fluorelastomere aus ähnlichen Gründen vorliegend aus, insbesondere Fluorkautschuke (FKM) und/oder Perfluorkautschuke (FFKM), Tetrafluorethylen/Propylen-Kautschuke (FEPM) und/oder fluorierte Silikonkautschuke.

In Untersuchungen der Anmelderin wurden hingegen als bevorzugte thermoplastisch verarbeitbare fluorpolymerhaltige Materialien die Stoffe Perfluoralkoxypolymer (PFA) und Tetrafluorethylenperfluorproylen (FEP) identifiziert. Ebenfalls als geeignet wurden die Stoffe Polychlortrifluorethylen (PCTFE) und Polyvinylidenfluorid (PVDF) identifiziert. Die Stoffe Polychlortrifluorethylen (PCTFE) und Polyvinylidenfluorid (PVDF) sind aufgrund ihrer im Vergleich zu Perfluoralkoxypolymer (PFA) und Tetrafluorethylenperfluorproylen (FEP) etwas geringeren Temperaturbeständigkeit allerdings insbesondere nur zur Verwendung bei geringeren Einsatztemperaturen (zum Beispiel für Einsatztemperaturen unterhalb von 210°C) vorzusehen. Die Verwendung von Perfluoralkoxypolymer (PFA) und/oder Tetrafluorethylenperfluorproylen (FEP) ist insbesondere für hohe Einsatztemperaturen (zum Beispiel für Einsatztemperaturen von bis zu 280°C oder sogar bis zu 305°C) die vorzuziehende Lösung.

Wenngleich es bevorzugt ist, dass das thermoplastisch verarbeitbare, fluorpolymerhaltige Material aus Perfluoralkoxypolymer (PFA) oder Tetrafluorethylenperfluorproylen (FEP) oder Polychlortrifluorethylen (PCTFE) oder Polyvinylidenfluorid (PVDF) besteht, kann es sich auch um Mischungen dieser Substanzen handeln oder um Materialien, die diese Substanzen nur zu einem gewissen Anteil aufweisen, vorzugsweise mindestens 50%, besonders bevorzugt mindestens 75%.

Besonders bevorzugt sind fluorpolymerhaltige Materialien, die thermoplastisch verarbeitbar sind und einen Schmelzpunkt oder Schmelzbereich zwischen 170°C und 320°C aufweisen, insbesondere von mindestens 260°C.

Unter Tetrafluorethylenperfluorproylen (FEP) versteht sich hierbei insbesondere die chemische Substanz mit der Strukturformel [-CF2-CF2-CF(CF3)-CF2-]n. Unter Tetrafluorethylenperfluorproylen (FEP) verstehen sich hierbei insbesondere chemische Substanzen, die durch Polymerisation von Gemischen des Monomers Tetrafluorethylen (TFE) mit einem von Null verschiedenen, insbesondere von Null wesentlich verschiedenen, Anteil des Monomers Hexafluorpropylen (HFP) herstellbar sind.

Unter Perfluoralkoxypolymeren (PFA) verstehen sich hierbei insbesondere chemische Substanzen, die durch Polymerisation von Gemischen des Monomers Tetrafluorethylen (TFE) mit einem von Null verschiedenen, insbesondere von Null wesentlich verschiedenen, Anteil des Monomers Perfluorpropylvinylether (PPVE) herstellbar sind. Unter Perfluoralkoxypolymeren (PFA) verstehen sich hierbei insbesondere chemische Substanzen mit der Strukturformel [-CF2-CF2-CF(OR)-CF2-]n, wobei die Seitengruppe OR mindestens eine Alkoxygruppe ist. Insbesondere handelt es sich um vollfluorierte Polymere mit zumindest einer Alkoxy-Seitenkette. Perfluoralkoxypolymere (PFA) sind insbesondere chemische Substanzen, die thermoplastisch verarbeitbar sind, keramische, oxidische, Glas-, und/oder Metalloberflächen benetzen können und mit Polytetrafluorethylen (PTFE) verschmelzbar sind. Es sind von der Erfindung insbesondere verschiedene PFA-Qualitäten und/oder Mischungen aus verschiedenen PFA-Qualitäten, sogenannte PFA-Polyblends, umfasst. Besonders positive Erfahrungen im Zusammenhang mit der vorliegenden Erfindung liegen der Anmelderin mit der Verwendung von PFA-Polyblends vor, deren Schmelzbereich zwischen 260°C bis 320°C liegt, insbesondere von 260°C bis 320°C reicht. Bevorzugt sind Polymere mit einer Molmasse von 3*10^5 bis 3*10^6 g/mol.

Unter Polychlortrifluorethylen (PCTFE) versteht sich hierbei insbesondere die chemische Substanz mit der Strukturformel [-CFCl-CF2-]n.

Unter Polyvinylidenfluorid (PVDF) versteht sich hierbei insbesondere die chemische Substanz mit der Strukturformel [-CH2-CF2-]n.

Das Ausfüllen des Querschnitts des sich zwischen der Schutzhülse und dem zumindest einen Anschlusskabel befindlichen Raums erfolgt erfindungsgemäß mit einem thermoplastisch verarbeitbaren, fluorpolymerhaltigen Material. Insbesondere erfolgt das Ausfüllen des Querschnitts des sich zwischen der Schutzhülse und dem zumindest einen Anschlusskabel befindlichen Raums mit einem homogenen thermoplastisch verarbeitbaren, fluorpolymerhaltigen Material, dessen chemische Zusammensetzung also entlang dieses Querschnitts insbesondere im Wesentlichen unverändert ist. Der Begriff homogen stellt dabei insbesondere auf die makroskopische Homogenität des Materials ab und lässt mikroskopische Inhomogenitäten selbstredend unberücksichtigt. Bevorzugt erfolgt das Ausfüllen des Querschnitts des sich zwischen der Schutzhülse und dem zumindest einen Anschlusskabel befindlichen Raums mit einem einzigen homogenen thermoplastisch verarbeitbaren, fluorpolymerhaltigen Material, dass heißt, zumindest ein gesamter zwischen der Schutzhülse und dem mindest einen Anschlusskabel befindlicher Querschnitt, zum Beispiel ein gesamter zwischen der Schutzhülse und der Isolierung des mindestens einen Anschlusskabel befindlicher Querschnitt, ist insgesamt mit dem einzigen, homogenen, thermoplastisch verarbeitbaren, fluorpolymerhaltigen Material ausgefüllt.

In sehr bevorzugten Weiterbildungen der Erfindung kommt es im Bereich dieses Querschnitts zu einem Stoffschluss zwischen dem thermoplastisch verarbeitbaren fluorpolymerhaltigen Material mit der Schutzhülse und/oder es kommt im Bereich dieses Querschnitts zu einem Stoffschluss zwischen dem thermoplastisch verarbeitbaren fluorpolymerhaltigen Material und dem Anschlusskabel/ den Anschlusskabeln.

Erfindungsgemäß kommt es zu einer insgesamt stoffschlüssigen Abdichtung zwischen dem/den Anschlusskabel (n) und der Schutzhülse mittelbar durch das thermoplastisch verarbeitbare fluorpolymerhaltige Material.

Die Kabeldurchführung zeichnet sich im Vergleich zum Stand der Technik insbesondere durch das Fehlen eines vorgefertigten Stopfens aus, wie er beispielsweise bei dem im eingangs zitierten Stand der Technik offenbarten Sensor Verwendung findet. Unter einem vorgefertigten Stopfen wird hierbei ein, im Stand der Technik auch als Tülle bezeichneter Stopfen verstanden, der einen oder mehrere axiale Durchgänge zur Aufnahme von jeweils einem oder mehreren elektrischen Anschlusskabeln aufweist und der in eine Schutzhülse eines Abgassensors einsetzbar oder eingesetzt ist, insbesondere in seiner endgültigen Gestalt.

Stattdessen weist die erfindungsgemäße Kabeldurchführung und der erfindungsgemäße Sensor insbesondere lediglich ein thermoplastisch verarbeitbares fluorpolymerhaltiges Material auf, das insbesondere flüssig in das Innere der Schutzhülse eingebracht ist und dort zumindest einen Querschnitt des sich zwischen der Schutzhülse und dem zumindest einen Anschlusskabel befindlichen Raums ausfüllt, insbesondere stoffschlüssig ausfüllt.

Das Einbringen des insbesondere flüssigen oder verflüssigten thermoplastisch verarbeitbaren fluorpolymerhaltigen Materials in das Innere der Schutzhülse bzw. des Abgassensors kann grundsätzlich auf verschiedenartige Weise erfolgen. So ist ein Einbringen durch Spritzguss bzw. Umspritzen möglich. Eine Alternative besteht in einem Eintauchen der Schutzhülse in ein flüssiges oder verflüssigtes thermoplastisch verarbeitbares, fluorpolymerhaltiges Material. Hierbei wird die Stirnseite der Schutzhülse durch die das mindestens eine Anschlusskabel aus der Schutzhülse herausgeführt ist, vorzugsweise nach unten geneigt, zum Beispiel in einem gegen die Waagrechte geneigten Winkel von 0° bis 90°, zum Beispiel 30° bis 60°. Beim Einbringen des insbesondere flüssigen oder verflüssigten thermoplastisch verarbeitbaren, fluorpolymerhaltigen Material in das Innere der Schutzhülse bzw. des Abgassensors können als Hilfsmittel Schablonen, die weiter abgasseitige Bereiche der Schutzhülse bzw. des Abgassensors abdecken, verwendet werden. Derartige Hilfsmittel können alternativ nach Einbringen des thermoplastisch verarbeitbaren, fluorpolymerhaltigen Materials wieder entfernt werden oder in der Schutzhülse bzw. in dem Abgassensor verbleiben.

Alternativ ist es auch möglich, das thermoplastisch verarbeitbare fluorpolymerhaltige Material in zunächst festem Zustand außerhalb oder innerhalb der Schutzhülse zu deponieren und dann durch Erwärmen zu verflüssigen, sodass es im Anschluss an die in Folge der Verflüssigung erfolgenden Fließprozesse zumindest einen Querschnitt des sich zwischen der Schutzhülse und dem zumindest einen Anschlusskabel befindlichen Raums ausfüllt und sich anschließend wieder verfestigt. Jedoch fällt diese Variante nicht in den Schutzumfang der Ansprüche.

Durch das insbesondere Fehlen eines vorgefertigten Stopfens ergibt sich insbesondere die Komplikation, dass es dem Anschlusskabel oder den Anschlusskabeln während der Montage der Kabeldurchführung insbesondere an seitlicher Führung fehlt, was eine Unsicherheit im Fertigungsprozess und am fertig gestellten Produkt darstellt. Insbesondere ist auch eine Zugentlastung für die Anschlusskabel in diesem Fall während der Montage des Kabelabgangs nicht gegeben. Aus diesem Grund sehen spezielle Weiterbildungen der Erfindung vor, dass die Schutzhülse zumindest eine Halterung des mindestens einen Anschlusskabels aufweist. Diese Halterung bewirkt insbesondere eine seitliche Fixierung des Anschlusskabels bzw. der Anschlusskabel und/oder eine zugentlastende Wirkung. Insbesondere eine axiale Fixierung kann durch die Halterung gegeben sein.

Eine zusätzliche oder alternative Funktion der Halterung ist es, das thermoplastisch verarbeitbare, fluorpolymerhaltige Material axial abzustützen, und zwar einerseits am fertig gestellten Produkt, bei dem sich das thermoplastisch verarbeitbare, fluorpolymerhaltige Material in einem festen Zustand befindet, als auch während der Herstellung der Kabeldurchführung bzw. während der Herstellung des Abgassensors. Bei letzterem verhindert die Halterung ein zu tiefes Eindringen des thermoplastisch verarbeitbaren, fluorpolymerhaltigen Materials in das Innere der Kabeldurchführung bzw. des Abgassensors.

Die Gestalt der Halterung kann verschiedenartig sein, wobei die Halterung insbesondere Mittel zu ihrer Befestigung in der Schutzhülse aufweist, beispielsweise einen mit der Schutzhülse verschweißbaren und/oder verklemmbaren äußeren, insbesondere metallischen, Ringabschnitt. Zusätzlich oder alternativ weist die Halterung insbesondere Mittel zur Fixierung des mindestens einen Anschlusskabels und/oder zur Abstützung des thermoplastisch verarbeitbaren fluorpolymerhaltigen Materials auf. Auch die Funktion der Anbindung des verflüssigten thermoplastisch verarbeitbaren, fluorpolymerhaltigen Materials kommt zusätzlich oder alternativ in Betracht.

Beispielsweise kann es sich bei der Halterung um einen im Inneren der Schutzhülse befestigten, insbesondere verschweißten oder geklemmten, Einsatz handeln. Die Halterung bzw. der Einsatz kann Durchgänge zur Aufnahme und Fixierung der mindestens einen Anschlussleitung aufweisen. Auch Einsätze, die Ösen und/oder Haken und/oder sich kreuzende Stege aufweisen, die jeweils insbesondere der Aufnahme und Fixierung der Anschlussleitungen dienen, sind möglich. Die Haltevorrichtung ist dabei vorzugsweise metallisch ausgebildet, beispielsweise aus rostfreiem Stahl.

Zusätzlich oder optional ist vorgesehen, dass die Schutzhülse becherförmig ausgebildet ist, also insbesondere einen Boden und eine um dessen Rand umlaufend angeordnete Wand aufweist. Insbesondere können eine oder mehrere, zum Beispiel zwei, drei oder vier usw., Durchgangsöffnungen im Boden des Bechers ausgebildet sein, durch die jeweils ein oder mehrere, zum Beispiel zwei, drei oder vier usw., Anschlusskabel hindurchgeführt sind. Es ist ferner insbesondere vorgesehen, dass in solchen Weiterbildungen der Erfindung zumindest ein Querschnitt des sich zwischen der Schutzhülse und dem zumindest einen Anschlusskabel befindlichen Raums mit einem thermoplastisch verarbeitbaren, fluorpolymerhaltigen Material dadurch ausgefüllt ist, dass das thermoplastisch verarbeitbare, fluorpolymerhaltige Material zumindest teilweise im Bereich der mindestens einen Durchgangsöffnung im Boden des Bechers ausgebildet ist. Der Vorteil dieser Weiterbildungen besteht darin, dass der offene Querschnitt der Durchgangsöffnung(en) im Boden des Bechers im Vergleich zum Querschnitt des Schutzrohres abseits des Becherbodens insbesondere verringert ist, zum Beispiel nicht mehr als 65% oder nicht mehr als 30% beträgt, wodurch eine Abdichtung der Schutzhülse mit vergleichsweise wenig thermoplastisch verarbeitbaren, fluorpolymerhaltigen Material und mechanisch besonders stabil erfolgen kann.

Zusätzlich oder optional ist vorgesehen, dass die Kabeldurchführung mindestens ein von der Schutzhülse separates Führungsstück aufweist. Unter einem von der Schutzhülse separatem Führungsstück ist insbesondere zu verstehen, dass das Führungsstück weder einstückig mit der Schutzhülse noch unmittelbar stoffschlüssig oder kraftschlüssig mit der Schutzhülse verbunden ist. Ein mittelbarer Stoffschluss oder Kraftschluss kann jedoch vorgesehen sein, etwa indem am fertigen Produkt das feste und/oder verfestigte thermoplastisch verarbeitbare, fluorpolymerhaltige Material zwischen dem Führungsstück und der Schutzhülse, beispielsweise lateral und/oder axial zwischen dem Führungsstück und der Schutzhülse, angeordnet ist. Das separate Führungsstück dient insbesondere zur zumindest seitlichen Führung des mindestens einen Anschlusskabels, so dass es relativ zur Schutzhülse, und, im Fall des Vorhandenseins mindestens eines zweiten Anschlusskabels, relativ zu diesem, seitlich fixiert ist. Aber auch eine axiale Fixierung des mindestens einen Anschlusskabels, also insbesondere eine zugentlastende Wirkung kann vorgesehen sein. Das separate Führungsstück kann scheibenförmig ausgebildet sein und/oder mindestens eine Durchgangsöffnung aufweisen, wobei durch jede der mindestens einen Durchgangsöffnungen mindestens ein Anschlusskabel hindurchführbar oder hindurchgeführt sein kann. Zusätzlich oder alternativ kann das thermoplastisch verarbeitbare, fluorpolymerhaltige Material zumindest teilweise im Bereich der mindestens einen Durchgangsöffnung des Führungsstücks angeordnet sein.

Das separate Führungsstück kann insbesondere becherförmig ausgebildet sein, also insbesondere einen Boden und eine um dessen Rand umlaufend angeordnete Wand aufweisen. Insbesondere ist hierbei im Boden des Bechers mindestens eine Durchgangsöffnung angeordnet, wobei durch jede der mindestens einen Durchgangsöffnung mindestens ein Anschlusskabel hindurchführbar oder hindurchgeführt sein kann. Insbesondere ist das thermoplastisch verarbeitbare, fluorpolymerhaltigen Material zumindest teilweise im Inneren des Bechers angeordnet. Insbesondere ist der Becher mit seiner offenen Seite über die Stirnseite der Schutzhülse geschoben, insbesondere also die Wand des becherförmigen Führungsstücks über die Wand der Schutzhülse. Insbesondere gelangt bei diesem Überschieben zumindest ein Teil des insbesondere aufgeschmolzenen bzw. flüssigen, thermoplastisch verarbeitbaren, fluorpolymerhaltigen Material in den zwischen der Schutzhülse und dem zumindest einen Anschlusskabel befindlichen Raum, wo es sich insbesondere verfestigt und nachfolgend zumindest einen Querschnitt des sich zwischen der Schutzhülse und dem zumindest einen Anschlusskabel befindlichen Raums ausgefüllt.

Es ist zweckmäßig, dass zumindest Teile des thermoplastisch verarbeitbaren, fluorpolymerhaltigen Materials im Inneren der Schutzhülse angeordnet sind. Auch die Anordnung des gesamten, der Kabeldurchführung zugehörigen, thermoplastisch verarbeitbaren, fluorpolymerhaltigen Materials im Inneren der Schutzhülse ist grundsätzlich möglich und eine die Stabilität der Kabeldurchführung verbessernde Maßnahme. Andere Ausführungsformen sehen vor, dass das thermoplastisch verarbeitbare, fluorpolymerhaltige Material axial über die zumindest eine Stirnseite der Schutzhülse übersteht und/oder dass das thermoplastisch verarbeitbare, fluorpolymerhaltige Material lateral über die Seitenfläche der Schutzhülse übersteht. Auch die Anordnung eines Teiles des thermoplastisch verarbeitbaren, fluorpolymerhaltigen Materials auf der Außenfläche der Schutzhülse ist möglich. Insbesondere sind derartige Anordnungen des thermoplastisch verarbeitbaren, fluorpolymerhaltigen Materials geeignet, dessen Anhaftung an der Schutzhülse und insbesondere die Dichtheit und Dauerhaftigkeit der Kabeldurchführung zu verbessern.

Bei einer stoffschlüssigen Verbindung handelt es sich um eine Verbindung, bei der ein Zusammenhalt der Fügepartner durch die auf molekularer Ebene wirksam werdenden Kräfte erfolgt, so wie es insbesondere auch in der VDI-Richtlinie 2232-2004-01 definiert ist. Beispiele für stoffschlüssige Verbindungen sind Verschweißungen, Verklebungen, Verschmelzungen usw. Bei der stoffschlüssigen Verbindung kann es sich insbesondere um eine unmittelbare stoffschlüssige Verbindung zwischen zwei Fügepartnern handeln, bei der es zu einer unmittelbaren Wechselwirkung zwischen den beiden Fügepartnern auf molekularer Ebene kommt. Bei der stoffschlüssigen Verbindung kann es sich andererseits insbesondere auch um eine mittelbare stoffschlüssige Verbindung handeln, bei der die beiden Fügepartner nicht unmittelbar stoffschlüssig miteinander verbunden sind, sondern jeweils mit zumindest einem dritten Fügepartner unmittelbar stoffschlüssig verbunden sind und im Fall mehrerer dritter Fügepartner alle diese dritten Fügepartner (mittelbar oder unmittelbar) stoffschlüssig miteinander verbunden sind.

Unter Durchgangsöffnungen und Löchern sind im Rahmen dieser Anmeldung stets insbesondere Löcher zu verstehen, bevorzugt mit einem Durchmesser von 0,5 bis 2,5 mm, besonders bevorzugt von 1 bis 2 mm bzw. mit einer Querschnittsfläche von 0,25 bis 6 mm², besonders bevorzugt von 1 bis 4 mm².

Es ist bevorzugt, dass durch die Vorsehung der erfindungsgemäßen Maßnahmen eine anschlussseitige Dichtheit des Gehäuses des Abgassensors resultiert, die vergleichsweise hoch ist, beispielsweise eine Heliumdichtheit von weniger als 10^-3 mbar*l/s oder 10^-4 mbar*l/s, bevorzugt sogar eine Heliumdichtheit von weniger als 10^-5 mbar*l/s oder 10^-6 mbar*l/s. Andererseits sind die Begriffe "Dichtung", "abgedichtet" etc. auch nicht zu eng auszulegen, sodass insbesondere auch ein lediglich makroskopischer Verschluss umfasst sein kann. Auch eine eventuell verbleibende Leckage durch das Innere einer, insbesondere schlauchförmigen, Isolation des Anschlusskabels oder der Anschlusskabel bleibt vorliegend außer Betracht, da diese Leckage an anderer Stelle, zum Beispiel an einem mit dem Anschlusskabel und den Anschlusskabeln verbundenen Stecker, abgedichtet werden kann. Auch die Herausleitung einer solchen Leckage durch das Anschlusskabel oder durch die Anschlusskabel in einen unkritischen Bereich, beispielsweise einen kälteren und weniger exponierten Bereich eines Kraftfahrzeuges, ist vorsehbar. Eine absolute oder hermetische Dichtheit (insbesondere eine Heliumdichtheit von weniger als 10^-10 mbar*l/s) ist zwar grundsätzlich möglich, aber mit Ausnahme von speziellen Anwendungen gleichsam kostenprohibitiv.

Die Erfindung betrifft auch ein Verfahren zur Herstellung einer Kabeldurchführung zur Abdichtung und zur elektrischen Kontaktierung eines Abgassensors, umfassend eine Schutzhülse und umfassend zumindest ein Anschlusskabel, das auf zumindest einer Stirnseite der Schutzhülse aus der Schutzhülse herausgeführt ist, insbesondere zur Herstellung einer Kabeldurchführung nach einem der Ansprüche 1 bis 13 oder eines Abgassensors nach Anspruch 15, gekennzeichnet durch das Einbringen eines verflüssigten, fluorpolymerhaltigen Materials in den zwischen der Schutzhülse und dem zumindest einen Anschlusskabel befindlichen Raum.

Bei dem verflüssigten, fluorpolymerhaltigen Material kann es sich insbesondere um ein thermoplastisch verarbeitbares, fluorpolymerhaltiges Material handeln.

Das erfindungsgemäße Verfahren zur Herstellung einer Kabeldurchführung zur Abdichtung und zur elektrischen Kontaktierung eines Abgassensors, umfassend eine Schutzhülse und umfassend zumindest ein Anschlusskabel, das auf zumindest einer Stirnseite der Schutzhülse aus der Schutzhülse herausgeführt ist, insbesondere zur Herstellung einer Kabeldurchführung nach einem der Ansprüche 1 bis 13 oder eines Abgassensors nach Anspruch 14, kann zusätzlich oder alternativ insbesondere einen oder mehrere der folgenden Verfahrensschritte aufweisen, beispielsweise in der angegebenen Reihenfolge.
- Bereitstellen einer insbesondere metallischen Schutzhülse, insbesondere in Form eines ein- oder zweiseitig offenen Rohrs
- Seitliches Fixieren mindestens eines Anschlusskabels im Inneren der Schutzhülse, beispielsweise mittel einer Halterung wie oben und/oder in den Ausführbeispielen beschrieben oder mittels eines separatem Führungsstücks, wie oben und/oder in den Ausführbeispielen beschrieben, oder mittels eines Durchgangslochs der Schutzhülse wie oben und/oder in den Ausführbeispielen beschrieben.
- Verbinden, insbesondere kraftschlüssiges und/oder stoffschlüssiges und/oder formschlüssiges Verbinden, des abgasseitigen Endes des mindestens einen Anschlusskabels mit mindestens einem Kontakt eines, insbesondere keramischen, Sensorelements des Abgassensors, insbesondere mit mindestens einem an dem abgasseitigen Ende des mindestens einen Anschlusskabels befestigten, elastischem Anschlusselement.

- Verschweißen der Schutzhülse mit dem Gehäusekörper des Abgassensors, insbesondere durch Laserschweißen.
- Einbringen einer verflüssigten Schmelzmasse oder Spritzgussmasse aus thermoplastischem Fluorpolymer, insbesondere bei einer Temperatur zwischen 240 und 320°C oder Temperatur zwischen 290 und 320°C, in den zwischen der Schutzhülse und dem zumindest einen Anschlusskabel befindlichen Raum durch die stirnseitige Öffnung der Schutzhülse, aus der das zumindest eine Anschlusskabel herausgeführt ist, beispielsweise durch Einspritzen oder Eintauchen, sodass es bei nachfolgendem Abkühlen des thermoplastisch verarbeitbaren, fluorpolymerhaltigen Material zu einer insbesondere stoffschlüssigen Abdichtung zwischen der Schutzhülse und dem zumindest einen Anschlusskabel insbesondere durch das thermoplastisch verarbeitbare, fluorpolymerhaltige Material kommt.

In einer besonderen Variante des Herstellungsverfahrens ist die Reihenfolge der beiden letztgenannten Verfahrensschritte vertauscht. Es erfolgt also das Einbringen der verflüssigten Schmelzmasse oder Spritzgussmasse aus thermoplastischem Fluorpolymer vor dem Verschweißen der Schutzhülse mit dem Gehäusekörper des Abgassensors. Es wird also mit anderen Worten zunächst eine erfindungsgemäße Kabeldurchführung fertig gestellt und diese anschließend mit dem Gehäusekörper eines Abgassensors zu einem erfindungsgemäßen Abgassensor verbunden.

### Zeichnung

Die Figuren 1a, 1b und 1c zeigen ein Beispiel für einen aus dem Stand der Technik bekannten Abgassensor mit zugehöriger Kabeldurchführung.
Die Figuren 2a, 2b, 2c zeigen ein erstes Ausführbeispiel der Erfindung.
Die Figuren 3a, 3b, 4a, 4b zeigen ein zweites Ausführbeispiel der Erfindung.
Die Figuren 5a, 5b zeigen ein drittes Ausführbeispiel der Erfindung.
Die Figuren 6a, 6b, 6c, 7a und 7b zeigen ein viertes Ausführbeispiel der Erfindung.

### Beschreibung der Ausführungsbeispiele

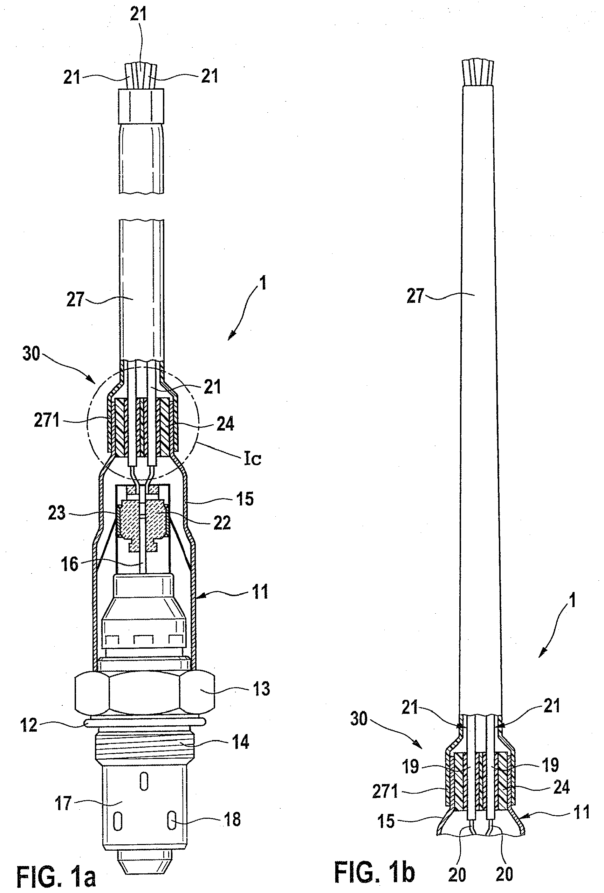

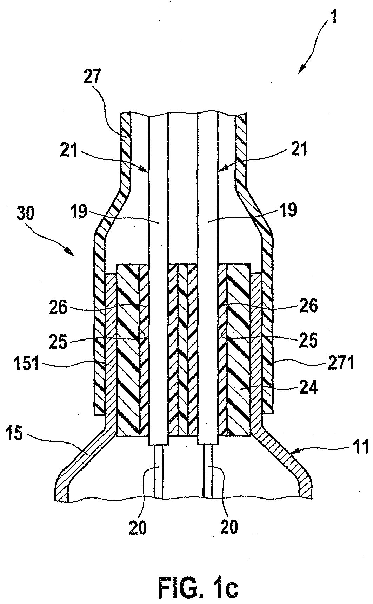

Die Figuren 1a, 1b und 1c zeigen ein Beispiel für einen aus dem Stand der Technik bekannten Abgassensor mit zugehöriger Kabeldurchführung 30.

Der in Figur 1a in Seitenansicht und teilweise geschnitten dargestellte Abgassensor 1 ist beispielhaft als Lambdasonde zur Messung der Sauerstoffkonzentration zum Beispiel im Abgas von Brennern oder Brennkraftmaschinen konzipiert. Er kann aber auch als Temperaturfühler oder als Druckmesser ausgeführt werden oder als Sensor zur Messung der Stickoxidkonzentration oder Russpartikelkonzentration im Abgas. Der Abgassensor 1 weist ein Gehäuse 11 auf Das Gehäuse 11 besteht aus einem massiven, hohlen Gehäusekörper 12 aus Metall mit einem Schraubgewinde 14 und einem Montagesechskant 13 zum Einschrauben des Gehäusekörpers 12 in ein am Abgasstutzen einer Brennkraftmaschine oder eines Brenners angeordnetes Anschlussstück und einer auf den Gehäusekörper 12 aufgeschobenen und mit diesem fest verbundenen Schutzhülse 15. Im Gehäuse 11 ist ein Sensorelement 16 angeordnet, das mit einem messgasseitigen Ende aus dem Gehäuse 11 vorsteht und dort von einem Gasdurchtrittslöcher 18 aufweisenden Schutzrohr 17 überdeckt wird, das abgasseitig am Gehäusekörper 12 befestigt ist. An dem vom messgasseitigen Ende abgekehrten, anschlussseitigen Ende trägt das Sensorelement 16 Kontaktflächen, die - wie hier nicht weiter dargestellt ist - über Leiterbahnen mit am messgasseitigen Ende angeordneten Messelektroden verbunden sind. Auf die Kontaktflächen sind die mit einer als Isoliermantel ausgebildeten Isolierung 19 umschlossenen, elektrischen Leiter 20 von Anschlusskabeln 21 kontaktiert. Vorliegend ist zur Kontaktierung von Kontaktflächen und elektrischen Leitern 20 ein zweiteiliger, keramischer Klemmkörper 22 vorgesehen, der außen von einem Federelement 23 umschlossen ist und die elektrischen Leiter 20 kraftschlüssig auf die Kontaktflächen des Sensorelements 16 aufpresst. Der Keramik-Klemmkörper 22 ist an der Schutzhülse 15 radial abgestützt.

In einen durchmesserkleineren Endabschnitt 151 der Schutzhülse 15 ist ein vorgefertigter Stopfen 24, zum Beispiel aus Polytetrafluorethylen (PTFE), eingesetzt, der eine der Zahl der Anschlusskabel 21 entsprechende Anzahl von axialen Durchgangskanälen 25 aufweist. Die mit ihren elektrischen Leitern 20 auf dem Sensorelement 16 kraftschlüssig festgelegten Anschlusskabel 21 sind durch die Durchgangskanäle 25 hindurchgeführt und treten am Ende des vorgefertigten Stopfens 24 aus der Schutzhülse 15 aus. Um eine auch bei höheren Temperaturen ausreichende Dichtigkeit am Kabelaustritt zu erreichen, ist die aus einem fluorhaltigen Material bestehende als Isoliermantel ausgebildete Isolierung 19 der Anschlusskabel 21 mit der Kanalwand der Durchgangskanäle 25 mindestes stellenweise verschweißt. In der Figur 1a ist - wie in der vergrößerten Ausschnittdarstellung der Figur 1c zu sehen ist - der lichte Durchmesser der Durchgangskanäle 25 größer bemessen als der Außendurchmesser der Anschlusskabel 21. Auf die in den Durchgangskanälen 25 einliegenden Kabelabschnitte ist jeweils ein Schweißschlauch 26 aufgeschoben, der zusammen mit dem jeweiligen Anschlusskabel 21 in den zugeordneten Durchgangskanal 25 des vorgefertigten Stopfens 24 eingezogen wird. Durch eine geeignete Erwärmung verschmilzt der Schweißschlauch 26 einerseits mit dem Material des als Isoliermantel ausgebildeten Isolierung 19 und andererseits mit dem Material des vorgefertigten Stopfens 24, so dass sowohl eine hohe Dichtheit der Kabelaustrittsstelle als auch eine große Festigkeit gegen Kabelauszug aus dem Gehäuse 11 hergestellt wird.

Vom Gehäuseaustritt an sind die Anschlusskabel 21 in einem gemeinsamen Schrumpfschlauch 27 aufgenommen, der mit seinem gehäuseseitigen Schlauchendabschnitt 271 auf den Endabschnitt 151 der Schutzhülse 15 aufgeschoben ist. Durch Vorheizen des Schrumpfschlauchs 27 oder des Endabschnitts 151 der Schutzhülse 15 schrumpft der Schrumpfschlauch 27 und presst sich auf den Endabschnitt 151 dicht auf. Der Schrumpfschlauch 27 kann ein- oder mehrschichtig oder -lagig ausgeführt sein und besteht aus einem Material, das mit fluorhaltigen Kunststoffen vergleichbare mechanische, physikalische und chemische Eigenschaften aufweist. In der Figur 1a weist der Schrumpfschlauch 27 über seine die Anschlusskabel 21 umschließende Länge einen etwa konstanten lichten Durchmesser auf. In der Figur 1b verjüngt sich der lichte Durchmesser des Schrumpfschlauchs 27 vom gehäuseseitigen Ende zum steckerseitigen Ende.

Insgesamt umfasst die in den Figuren 1a, 1b und 1c dargestellte und aus dem Stand der Technik bereits bekannte Kabeldurchführung 30 eine Vielzahl von Bestandteilen, die bei der Herstellung der Kabeldurchführung 30 bzw. bei der Herstellung des zugehörigen Abgassensors 1 diskret gehandhabt und, in die gewünschte relative Position zueinander gebracht, auch noch verbunden werden müssen. Neben der Schutzhülse 15 und den Anschlusskabeln 21 sind diese Bestandteile insbesondere der vorgefertigte Stopfen 21, die Schweißschläuche 26 und der Schrumpfschlauch 27. Die Herstellung der Kabeldurchführung 30 bzw. die Herstellung des zugehörigen Abgassensors 1 ist somit vergleichsweise aufwendig und teuer.

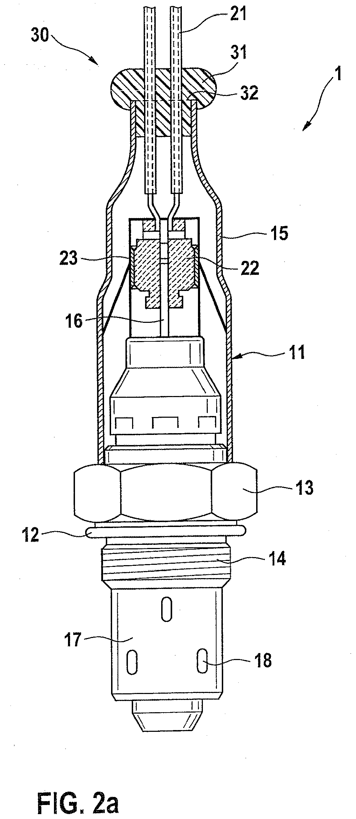

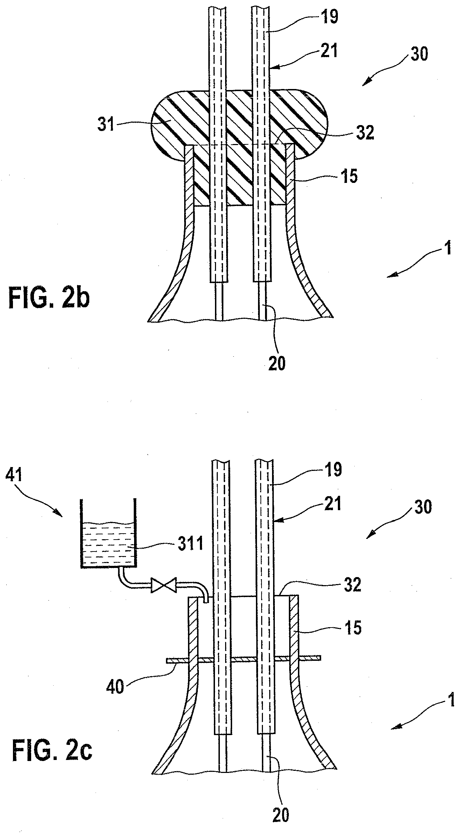

Die in den Figuren 2 bis 7 gezeigten und nachfolgend beschriebenen Ausführungsbeispiele erfindungsgemäßer Abgassensoren 1 bzw. erfindungsgemäßer Kabeldurchführungen 30 unterscheiden sich hingegen von der aus dem Stand der Technik bekannten Kabeldurchführung 30 bzw. von dem aus dem Stand der Technik bekannten Abgassensoren 1 dadurch, dass zumindest ein Querschnitt des sich zwischen der Schutzhülse 15 und dem zumindest einen Anschlusskabel 21 befindlichen Raums mit einem thermoplastisch verarbeitbaren, fluorpolymerhaltigen Material 31 ausgefüllt ist. Da insbesondere nur genau ein homogenes, thermoplastisch verarbeitbares, fluorpolymerhaltiges Material 31 vorgesehen ist, kann dieses, insbesondere mit geringem Fertigungsaufwand, beispielsweise in flüssigem oder verflüssigten Zustand, in den sich zwischen der Schutzhülse und dem zumindest einen Anschlusskabel befindlichen Raum eingebracht werden, insbesondere durch Fließen des thermoplastisch verarbeitbaren, fluorpolymerhaltigen Material 31, durch Spritzguss oder durch Umspritzen mit dem thermoplastisch verarbeitbaren, fluorpolymerhaltigen Material 31 oder durch Eintauchen der Stirnseite der Schutzhülse 15 in das thermoplastisch verarbeitbare, fluorpolymerhaltige Material 31.

Die in den Figuren 2 bis 7 gezeigten und nachfolgend beschriebenen Ausführungsbeispiele erfindungsgemäßer Abgassensoren 1 bzw. erfindungsgemäßer Kabeldurchführungen 30 unterscheiden sich zusätzlich oder alternativ von der aus dem Stand der Technik bekannten Kabeldurchführung 30 bzw. von dem aus dem Stand der Technik bekannten Abgassensoren 1 durch das Fehlen eines vorgefertigten Stopfens, wie ihn zum Beispiel der in den Figuren 1a, 1b und 1c gezeigt Abgassensor 1 aus dem Stand der Technik aufweist (Bezugszeichen 24). Bei den erfindungsgemäßen Abgassensoren 1 tritt an die Stelle des fehlenden vorgefertigten Stopfens ein fluorpolymerhaltiges Material 31, das flüssig in das Innere der Schutzhülse 15 eingebracht ist, es handelt sich also insbesondere um einen Kabelabgang 30, hergestellt gemäß dem unabhängigen Verfahrensanspruch. Das dabei verwendete fluorpolymerhaltige Material 31 ist insbesondere thermoplastisch verarbeitbar, insbesondere im Temperaturbereich von 240°C bis 320°C.

In der Figur 2a ist ein erstes Ausführungsbeispiel eines erfindungsgemäßen Abgassensors 1 gezeigt, der sich durch seine erfindungsgemäße Kabeldurchführung 30 von dem in den Figuren 1a, 1b und 1c gezeigten Abgassensor 1 aus dem Stand der Technik unterscheidet. Die erfindungsgemäße Kabeldurchführung 30 gemäß dem ersten Ausführungsbeispiel ist auch in der Figur 2b nochmals vergrößert und detaillierter gezeigt. Insofern nicht die Kabeldurchführung 30 betroffen ist, kann bezüglich des Aufbaus des erfindungsgemäßen Abgassensors 1 auf die Figur 1a und die zugehörige Beschreibung verwiesen werden.

Die Kabeldurchführung 30 gemäß dem ersten Ausführungsbeispiel weist eine Schutzhülse 15 auf, bei der es sich um ein Rohr mit axialer Symmetrie handelt, das auf seiner dem Abgas zugewandten Seite mit einem Gehäusekörper 12 verbunden, zum Beispiel mittels Laserstrahl verschweißt ist. In diesem Beispiel ist die Schutzhülse 15 ein tiefgezogenes Teil aus rostfreiem Stahl mit einer Wandstärke von 0,4mm bis 0,5mm. Die Schutzhülse 15 verjüngt sich zu der dem Abgas abgewandten Seite hin; kontinuierliche und/oder einfach oder mehrfach gestufte Verläufe des Schutzrohrs sind dabei insbesondere möglich. Auf der dem Abgas abgewandten Seite (in den Figuren 2a und 2b oben) weist das Schutzrohr 11 eine offene, zunächst noch unverschlossene Stirnseite 32 auf.

Die erfindungsgemäße Kabeldurchführung 30 weist zum Beispiel vier voneinander beabstandete Anschlusskabel 21 auf, von denen in den Figuren 2a und 2b jeweils zwei zu sehen sind. Alternativ könnten natürlich statt vier Anschlusskabeln 21 auch eine andere Anzahl von Anschlusskabeln 21 oder auch nur ein Anschlusskabel 21 vorgesehen sein. Die Anschlusskabel 21 weisen jeweils einen elektrischen Leiter 20 auf, der vorliegend aus Kupferlitze oder Stahl-Kupferlitze besteht, und ferner eine Isolierung 19, die den elektrischen Leiter 20 im Bereich der Kabeldurchführung 30 radial, insbesondere mantelförmig umgibt. Die Isolierungen 19 sind vorliegend als Isoliermäntel ausgebildet und bestehen aus Polytetrafluorethylen (PTFE), das eine vergleichsweise recht hohe Temperaturbeständigkeit aufweist. Der Durchmesser der Anschlusskabel 21 beträgt einschließlich der Isolierung 19 zum Beispiel 1mm, sodass es sich vorliegend um Anschlusskabel 21 handelt, die beispielweise zur Leitung von Strömen von einigen, zum Beispiel 2 oder 5, Ampere maximal geeignet sind. Die Abstände benachbarter Anschlusskabel 21 voneinander und von der Schutzhülse 15 betragen in diesem Beispiel im Bereich der Kabeldurchführung 1mm. Erfindungsgemäß ist vorgesehen, dass die Anschlusskabel 21 auf der Stirnseite 32 der Schutzhülse 15 aus der Schutzhülse 15 herausgeführt sind.

Es ist ein Querschnitt des sich zwischen der Schutzhülse 15 und den Anschlusskabeln 21 befindlichen Raums mit einem thermoplastisch verarbeitbaren, fluorpolymerhaltigen Material 31 ausgefüllt. In diesem Ausführbeispiel ist ein Bereich der Schutzhülse 15 vollständig ausgefüllt, der sich ausgehend von der Stirnseite 32 der Schutzhülse 15 einige, zum Beispiel 5 bis 10, Millimeter in die dem Abgas zugewandte Richtung der Schutzhülse 15 erstreckt. Darüber hinaus steht das thermoplastisch verarbeitbare, fluorpolymerhaltige Material 31 axial in die dem Abgas abgewandte Richtung und lateral über die Stirnseite 32 der Schutzhülse 15 über, ebenfalls um jeweils einige, zum Beispiel jeweils 1 bis 3, Millimeter.

Das thermoplastisch verarbeitbare, fluorpolymerhaltigen Material 31 ist in diesem Ausführungsbeispiel ein, insbesondere homogenes, Perfluoralkoxypolymer-Polyblend, dessen Schmelzbereich zwischen 260°C bis 320°C liegt, insbesondere von 260°C bis 320°C reicht. Bevorzugt ist die, Verwendung von Perfluoralkoxypolymer-Polyblends mit Molmassen von, insbesondere ausschließlich, 3*10^5 bis 3*10^6 g/mol. Auch andere Perfluoralkoxypolymer-Polyblends bzw. Perfluoralkoxypolymere (PFA) kommen grundsätzlich in Frage, ebenso die thermoplastisch verarbeitbaren, fluorpolymerhaltigen Materialien Tetrafluorethylenperfluorproylen (FEP), Polychlortrifluorethylen (PCTFE) und Polyvinylidenfluorid (PVDF).

Polytetrafluorethylen (PTFE), Fluorkautschuke (FKM), Perfluorkautschuke (FFKM), Tetrafluorethylen/Propylen-Kautschuke (FEPM) und fluorierte Silikonkautschuke sind hingegen keine thermoplastisch verarbeitbaren, fluorpolymerhaltigen Materialien und fallen nicht unter die vorliegende Erfindung, werden insbesondere vorliegend nicht zur Ausfüllung eines Querschnitt des sich zwischen der Schutzhülse 15 und den Anschlusskabeln 21 befindlichen Raums verwendet.

Zur Herstellung der Kabeldurchführung 30 gemäß diesem ersten Ausführungsbeispiel (Figur 2c) werden Anschlusskabel 21 durch die Stirnseite 32 einer Schutzhülse 15 hindurchgeführt und mittels eines Hilfsteils 40, das entweder verbleibt oder zu einem späteren Zeitpunkt entfernt wird oder entfernbar ist, axial und lateral in der Schutzhülse fixiert. Das Hilfsteil 40 bewirkt auch eine zumindest provisorische Abdichtung und/oder Abtrennung der Schutzhülse 15 zwischen seinen beiden axialen Enden. Anschließend wird mit einem Spritzgusswerkzeug 41 das als Gussmasse 311 vorliegende, verflüssigte, insbesondere thermoplastisch verarbeitbare, fluorpolymerhaltige Material 31 in den sich zwischen der Schutzhülse 15 und den Anschlusskabeln 21 befindlichen und durch das Hilfsteil 40 innerhalb der Schutzhülse 15 abgasabgewandt abgetrennten Raum eingebracht. Nach Erkalten bildet sich aus der eingebrachten Gussmasse 311 das verfestigte thermoplastisch verarbeitbare, fluorpolymerhaltige Material 31 aus.

Alternative Herstellverfahren sind ebenfalls möglich. So kann die wie in Figur 2c präparierte Vorrichtung auch senkrecht oder unter einem Winkel von 45° gegen die Waagrechte, jeweils mit der Stirnseite 32 voran, in eine Schmelzmasse aus thermoplastisch verarbeitbaren, fluorpolymerhaltigen Material 31 einmal oder wiederholt eingetaucht werden. Hierbei kommt es, in Folge der Abkühlung, zu einer Verfestigung der Schmelzmasse im Bereich der Schutzhülse 15 und somit bildet sich das verfestigte thermoplastisch verarbeitbare, fluorpolymerhaltige Material 31 in dem sich zwischen der Schutzhülse 15 und den Anschlusskabeln 21 befindlichen und durch das Hilfsteil 40 innerhalb der Schutzhülse 15 abgasabgewandt abgetrennten Raum aus. Insbesondere bildet sich eine stoffschlüssige Verbindung zwischen dem thermoplastisch verarbeitbaren, fluorpolymerhaltigen Material 31 mit dem Anschlusskabel 21 aus. Insbesondere bildet sich eine stoffschlüssige Verbindung zwischen dem thermoplastisch verarbeitbaren, fluorpolymerhaltigen Material 31 mit der Schutzhülse 11 aus. Insbesondere bildet sich eine insgesamt stoffschlüssige Abdichtung der Kabeldurchführung 31 aus.

Zur Herstellung des Abgassensors 1 gemäß Figur 2a wird insbesondere die oben beschriebene Kabeldurchführung 31 mit dem Gehäusekörper 12 verschweißt, zum Beispiel mittels Laserstrahl. Alternativ wäre es auch möglich, die noch nicht fertig gestellte Kabeldurchführung 30, etwa so, wie sie in Figur 2c gezeigt ist, mit dem Gehäusekörper 12 zu verschweißen, zum Beispiel mittels Laserstrahl, und erst anschließend das thermoplastisch verarbeitbare, fluorpolymerhaltige Material 31 einzubringen, beispielsweise so wie voranstehend für die Kabeldurchführung 30 beschrieben.

Alternative Ausführungsformen des ersten Ausführungsbeispiels sehen vor, dass die Schutzhülse 15 auf ihrer dem Abgas abgewandten Seite, im Bereich ihrer Stirnseite (in den Figuren 2a und 2b oben) besonders stark verjüngt und die Spalte zwischen den Anschlusskabeln 21 untereinander (im Fall mehrerer Anschlusskabel 21) und mit der Schutzhülse 15 enger sind. Zum Beispiel können die Abstände benachbarter Anschlusskabel 21 voneinander und von der Schutzhülse 15 in diesem Beispiel 0,35mm betragen.

Gemäß eines zweiten Ausführungsbeispiels sind Kabeldurchführungen 30 bzw. Abgassensoren 1 vorgesehen, die ausgehend von den Kabeldurchführungen 30 bzw. Abgassensoren 1 des ersten Ausführungsbeispiels durch die Vorsehung einer, beispielsweise metallischen, Halterung 33 im Inneren des Schutzrohrs 11 weitergebildet sind. Die Halterung 33 ist insbesondere mit der Schutzhülse 15 verklemmt und/oder verschweißt, beispielweise mittels Laserstrahl verschweißt.

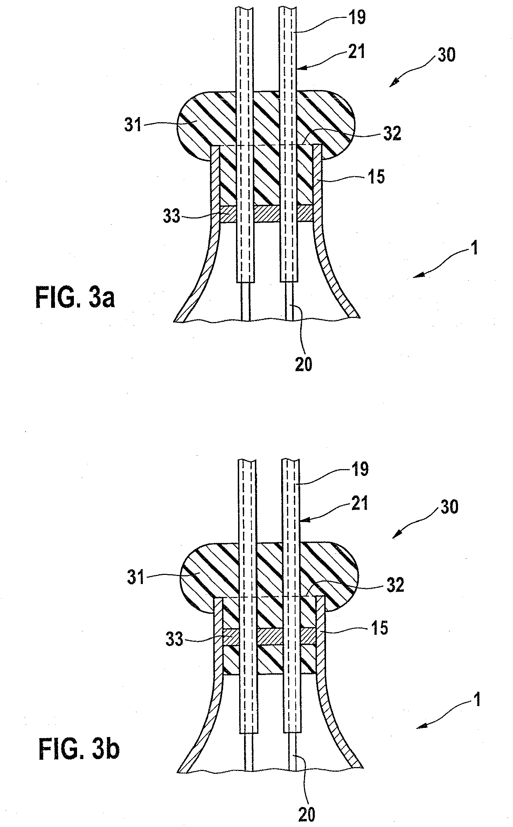

Die in Figur 3b gezeigte Halterung 33 ist in axialer Richtung innerhalb des thermoplastisch verarbeitbaren, fluorpolymerhaltigen Materials angeordnet, zum Beispiel mittig, und bewirkt eine seitliche und axiale Fixierung der Anschlusskabel 21. Im Unterschied hierzu ist die in Figur 3a gezeigte Halterung 33 abgasseitig (in Figur 3a unten) des thermoplastisch verarbeitbaren, fluorpolymerhaltigen Materials 31 angeordnet. Es bewirkt somit auch eine axiale Abstützung und/oder Anbindung des thermoplastisch verarbeitbaren fluorpolymerhaltigen Materials 31 und zwar einerseits am fertig gestellten Produkt, bei dem sich das thermoplastisch verarbeitbare, fluorpolymerhaltige Material 31 in einem festen Zustand befindet, als auch während der Herstellung der Kabeldurchführung bzw. während der Herstellung des Abgassensors 1. Bei letzterem verhindert die Halterung 33 ein zu tiefes Eindringen des thermoplastisch verarbeitbaren, fluorpolymerhaltigen Materials 31 in das Innere der Kabeldurchführung bzw. des Abgassensors 1, ähnlich wie das im Zusammenhang mit dem ersten Ausführungsbeispiel diskutierte Hilfsteil 40 (Figur 2c).

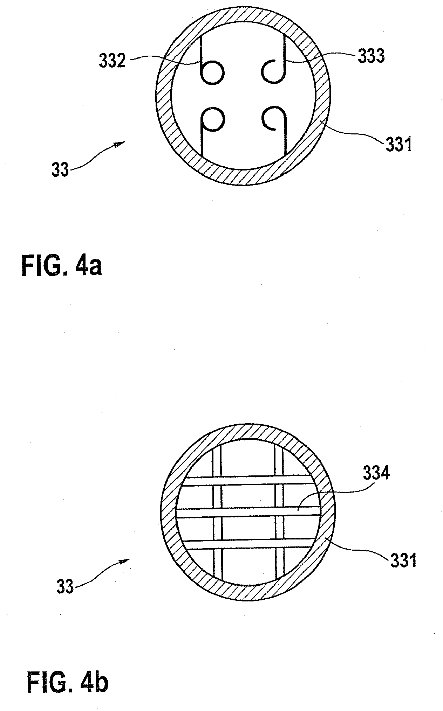

Beispiele für Halterungen 33 sind in den Figuren 4a und 4b in Aufsicht gezeigt. Die Halterungen 33 sind als Einsätze ausgebildet und weisen Mittel zu ihrer Befestigung in der Schutzhülse 15 auf, im Beispiel einen mit der Schutzhülse 15 verschweißbaren oder verklemmbaren metallischen äußeren Ringabschnitt 331. Ferner weisen die Halterungen 33 in diesen Beispielen jeweils ein Mittel zur Fixierung der Anschlusskabel 21 und zur Abstützung und/oder Anbindung des thermoplastisch verarbeitbaren fluorpolymerhaltigen Materials 31 auf. Dieses ist in der in der Figur 4a gezeigten Ausführungsform als Ösen 331 oder Haken 333 ausgebildet; in der in der Figur 4b gezeigten Ausführungsform ist es durch sich kreuzende Stege 334 ausgebildet.

Zur Herstellung der Kabeldurchführungen 30 bzw. Abgassensoren 1 gemäß dem zweiten Ausführungsbeispiel kann einerseits auf das im Zusammenhang mit der Herstellung der Kabeldurchführungen 30 bzw. Abgassensoren 1 gemäß dem ersten Ausführungsbeispiel verwiesen werden, wobei weitere Verfahrensschritte vorliegend in der Anordnung und Fixierung der Halterung 33 im Schutzrohr 11 und in der Fixierung der Anschlusskabel 21 in den dafür vorgesehenen Mitteln der Halterung 33 zu sehen sind. Die Anschlusskabel 33 werden hierfür beispielsweise durch die Ösen 331, Haken 332, Stege 333 und/oder so weiter eingelegt, eingehängt, hindurchgefädelt und/oder ähnliches.

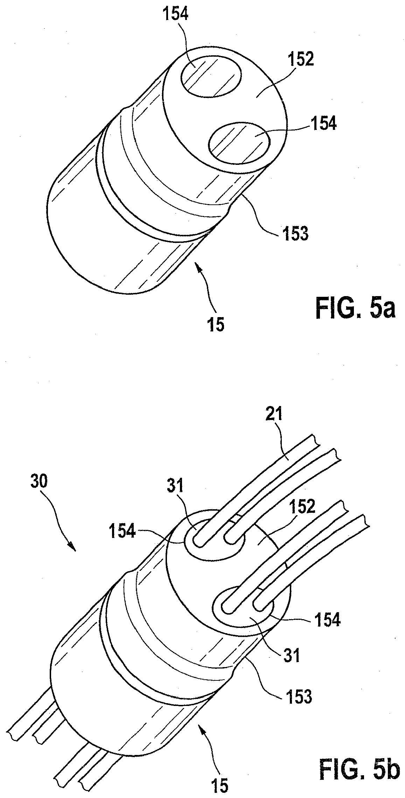

Bei den vorliegend in den Ausführungsbeispielen und Ausführungsformen dieser Anmeldung gezeigten Kabeldurchführungen 30 bzw. Abgassensoren 1 kann stets auch eine becherförmige Schutzhülse 15, wie beispielsweise in Figur 5a gezeigt, verwendet werden.

Die becherförmige Schutzhülse 15 weist einen Boden 152 und eine um dessen Rand umlaufende oder umlaufend angeordnete und fixierte Wand 153 auf. Im Beispiel sind zwei längliche, parallel zueinander angeordnete Durchgangsöffnungen 154 im Boden 152 der becherförmigen Schutzhülse 15 vorgesehen, durch die jeweils beispielsweise zwei Anschlusskabel 21 hindurchführbar sind. Bei Verwendung einer becherförmigen Schutzhülse 15 und zumindest einem Anschlusskabel 21, das durch eine Durchgangsöffnung 154 im Boden 152 dieser Schutzhülse hindurchgeführt ist, ist bevorzugt, dass thermoplastisch verarbeitbares, fluorpolymerhaltiges Material 31 im Bereich der Durchgangsöffnung 154 angeordnet ist und dort zumindest einen Querschnitt des sich zwischen der Schutzhülse 15 und dem zumindest einen Anschlusskabel 21 befindlichen Raums ausgefüllt, so wie bei der in Figur 5b perspektivisch dargestellten Kabeldurchführung 30, die das dritte Ausführungsbeispiel der vorliegenden Erfindung darstellt.

Der Vorteil der Verwendung einer derartigen becherförmigen Schutzhülse 15 bzw. einer derartigen Kabelabdurchführung 30 gemäß dem dritten Ausführungsbeispiel besteht darin, dass der offene Querschnitt der Durchgangsöffnungen 154 im Vergleich zum Querschnitt des Schutzrohres 15 abseits des Becherbodens 152, bzw. im Vergleich zur Fläche des Boden 152 des Bechers, deutlich verringert ist, in diesem Beispiel auf 25%. Die Abdichtung der Schutzhülse 15 ist somit mit vergleichsweise wenig thermoplastisch verarbeitbaren, fluorpolymerhaltigen Material 31 und mechanisch besonders stabil möglich.

Gemäß eines vierten Ausführungsbeispiels sind Kabeldurchführungen 30 bzw. Abgassensoren 1 vorgesehen, die ausgehend von den Kabeldurchführungen 30 bzw. Abgassensoren 1 der vorangehenden Ausführungsbeispiele durch die Vorsehung eines separaten Führungsstücks 34 weitergebildet sind.

Das separate Führungsstück 34 dient der axialen und lateralen Führung bzw. Fixierung der Anschlusskabel 21 untereinander, einerseits am fertig gestellten Abgassensor 1 bzw. an der fertig gestellten Kabeldurchführung 30, insbesondere aber bereits zu einem Zeitpunkt der Vormontage, zu dem die Anschlusskabel 21 gemeinsam und gemeinsam mit dem Führungsstück 34 der Schutzhülse 15 zugeführt werden.

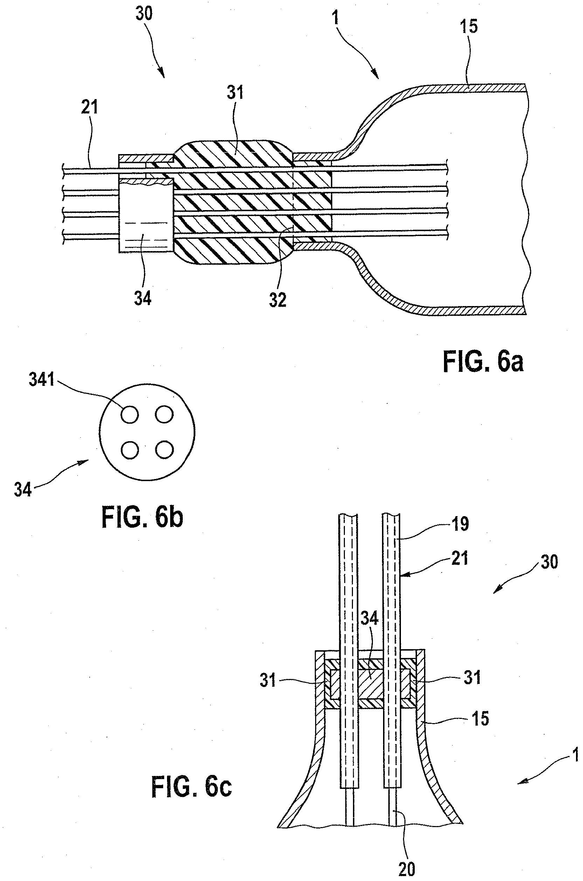

Eine erste Ausführungsform des vierten Ausführungsbeispiels eines erfindungsgemäßen Abgassensors 1 bzw. einer erfindungsgemäßen Kabeldurchführung 30 ist in der Figur 6a gezeigt. In der Figur 6b ist eine Aufsicht auf das zugehörige Führungsstück 34 gezeigt.

Das Führungsstück 34 ist in diesem Beispiel eine Scheibe von einigen, zum Beispiel 1,5 bis 4,5, Millimeter Dicke, dessen Durchmesser zum Beispiel mit dem der Stirnfläche 32 der Schutzhülse 15 übereinstimmt. Das Führungsstück 34 ist zum Beispiel metallisch, zum Beispiel aus rostfreiem Stahl ausgebildet. Das Führungsstück 34 weist entsprechend der Anzahl der zu führenden Anschlusskabel 21 eine Anzahl von Löchern 341 auf. Optional kann das thermoplastisch verarbeitbare, fluorpolymerhaltige Material 31 zumindest teilweise im Bereich der Löcher 341 des Führungsstücks 34 angeordnet sein.

Das Führungsstück 34 ist insbesondere beabstandet von der Schutzhülse 15 angeordnet, insbesondere ist in diesem Beispiel das thermoplastisch verarbeitbare, fluorpolymerhaltige Material 31 teilweise axial zwischen dem Führungsstück 34 und der Schutzhülse 15 angeordnet, und zwar in diesem Beispiel mit dem Führungsstück 34 und der Schutzhülse 15 jeweils stoffschlüssig verbunden.

Alternativ oder zusätzlich kann das Führungsstück 34 auch lateral von der Schutzhülse 15 beabstandet sein. Bei der in Figur 6c gezeigten Ausführungsform ist das Führungsstück 34 in das Innere der Schutzhülse 15 hineingeschoben. Hierbei ist ein zwischen Führungsstück 34 und der Schutzhülse 15 umlaufender Spalt mit dem thermoplastisch verarbeitbaren, fluorpolymerhaltigen Material 31 stoffschlüssig verfüllt.

Die Herstellung der in den Figuren 6a und 6c gezeigten Kabeldurchführungen 30 bzw. der zugehörigen Abgassensoren 1 erfolgt entsprechend dem zu den vorangehenden Ausführungsbeispielen gesagten.

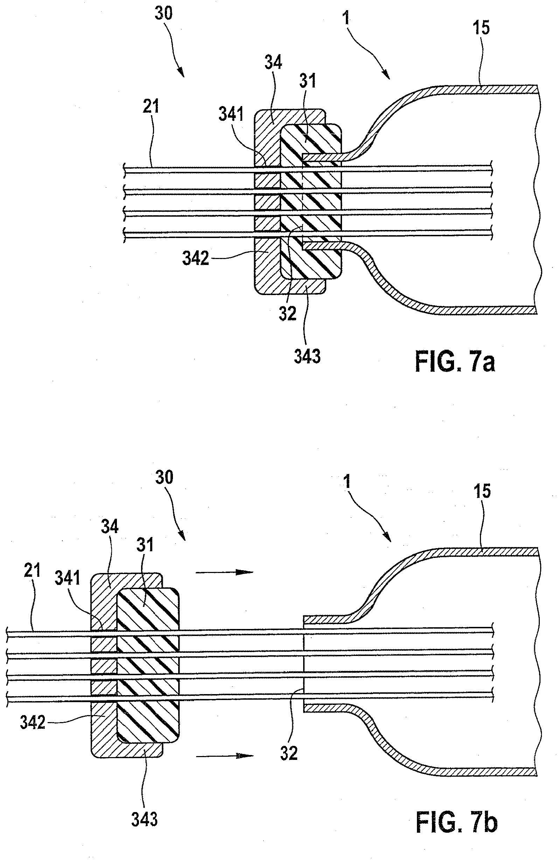

In einer weiteren Ausführungsform des vierten Ausführungsbeispiels einer erfindungsgemäßen Kabeldurchführung 30 bzw. eines erfindungsgemäßen Abgassensors 1 kommt ein becherförmig ausgeführtes Führungsstück 34 zur Verwendung, bestehend aus einem Löcher 341 aufweisenden Führungsstückboden 342 und einer von diesem aus abgasseitig weisenden und mit diesem fest verbundenen umlaufenden Führungsstückwand 343. Das becherförmige ausgeführte Führungsstück 34 ist hierbei mit der Führungsstückwand 343 voraus auf die Stirnseite 32 der Schutzhülse 15 aufgeschoben. Hierbei ist ein zwischen der Führungsstückwand 343 und der Schutzhülse 15 umlaufender Spalt mit dem thermoplastisch verarbeitbaren, fluorpolymerhaltigen Material 31 stoffschlüssig verfüllt (Figur 7a).

Die Herstellung einer Kabeldurchführung 30 gemäß der weiteren Ausführungsform des vierten Ausführungsbeispiels ist besonders elegant möglich, siehe Figur 7b. Hierzu wird thermoplastisch verarbeitbares, fluorpolymerhaltiges Material 30 zunächst in flüssiger Form in das becherförmig ausgeführte Führungsstück 34 gefüllt oder entsprechendes festes Material dort verflüssigt. Insbesondere weist dabei die Führungsstückwand 343 ausgehend vom Führungsstückboden 342 nach oben, entgegen der Schwerkraft (in Figur 7b nach rechts). Anschließend wird das becherförmig ausgeführte Führungsstück 34 auf die Schutzhülse 15 durch Relativbewegung aufgeschoben, sodass nach Verfestigung des thermoplastisch verarbeitbaren, fluorpolymerhaltigen Materials 31 die in Figur 7a gezeigte Kabeldurchführung entsteht.

In Varianten des Herstellungsverfahrens ist es auch möglich, das thermoplastisch verarbeitbare, fluorpolymerhaltige Material 31, zum Beispiel in Form einer Kapsel, zunächst in fester Form in das becherförmig ausgeführte Führungsstück 34 einzulegen und erst während oder nach dem Aufschieben des becherförmig ausgeführten Führungsstücks 34 auf die Schutzhülse 15 zu verflüssigen.

Überdies ist stets alternativ oder zusätzlich möglich, thermoplastisch verarbeitbares, fluorpolymerhaltiges Material 30 fest, insbesondere in Form einer Kapsel, an den Ort der vorzunehmenden Abdichtung im Inneren der Schutzrohrs 15 zu bringen, dort aufzuschmelzen, sodass es in die gewünschte Form überführt wird, und in dieser anschließend zu verfestigen.

## Patentansprüche

1. Kabeldurchführung zur Abdichtung und zur elektrischen Kontaktierung eines Abgassensors (1), umfassend eine metallische Schutzhülse (15) und umfassend zumindest ein Anschlusskabel (21), das auf zumindest einer Stirnseite (32) der metallischen Schutzhülse (15) aus der metallischen Schutzhülse (15) herausgeführt ist,
**dadurch gekennzeichnet, dass** zumindest ein Querschnitt des sich zwischen der metallischen Schutzhülse (15) und dem zumindest einen Anschlusskabel (21) befindlichen Raums mit einem thermoplastisch verarbeitbaren, fluorpolymerhaltigen Material (31) ausgefüllt ist, wobei eine insgesamt stoffschlüssige Abdichtung zwischen dem Anschlusskabel (21) und der metallischen Schutzhülse (15) mittelbar durch das thermoplastisch verarbeitbare fluorpolymerhaltige Material (31) erfolgt.

2. Kabeldurchführung nach Anspruch 1, **dadurch gekennzeichnet, dass** das thermoplastisch verarbeitbare, fluorpolymerhaltige Material (31) mindestens ein Perfluoralkoxypolymer oder ein Tetrafluorethylenperfluorproylen oder ein Polychlortrifluorethylen oder ein Polyvinylidenfluorid aufweist oder aus Perfluoralkoxypolymer oder Tetrafluorethylenperfluorproylen oder Polychlortrifluorethylen oder Polyvinylidenfluorid oder aus einer Mischung dieser Materialien besteht.

3. Kabeldurchführung nach einem der Ansprüche 1 oder 2, **dadurch gekennzeichnet, dass** das thermoplastisch verarbeitbare fluorpolymerhaltige Material (31) einen Schmelzpunkt oder Schmelzbereich zwischen 170°C und 320°C aufweist, insbesondere mindestens 260°C.

4. Kabeldurchführung nach einem der Ansprüche 1 bis 3, **dadurch gekennzeichnet, dass** das thermoplastisch verarbeitbare, fluorpolymerhaltige Material (31) homogen ausgebildet ist.

5. Kabeldurchführung nach einem der Ansprüche 1 bis 4, **dadurch gekennzeichnet, dass** das thermoplastisch verarbeitbare, fluorpolymerhaltige Material (31) flüssig in den sich zwischen der metallischen Schutzhülse (15) und dem zumindest einen Anschlusskabel (21) befindlichen Raum eingebracht ist, insbesondere durch Spritzguss oder durch Eintauchen.

6. Kabeldurchführung nach einem der Ansprüche 1 bis 4, **dadurch gekennzeichnet, dass** das thermoplastisch verarbeitbare, fluorpolymerhaltige Material (31) fest in den sich zwischen der Schutzhülse und dem zumindest einen Anschlusskabel (21) befindlichen Raum eingebracht und anschließend aufgeschmolzen ist.

7. Kabeldurchführung nach einem der Anspruch 1 bis 6, **dadurch gekennzeichnet, dass** sie eine, vorzugsweise metallisch ausgebildete, Halterung (33) aufweist, die der seitlichen und/oder axialen Halterung des zumindest einen Anschlusskabels, insbesondere der seitlichen und/oder axialen Fixierung des mindestens einen Anschlusskabels (21) dient und/oder zur Abstützung des thermoplastisch verarbeitbaren, fluorpolymerhaltigen Materials (31) in axialer Richtung dient.

8. Kabeldurchführung nach Anspruch 7, **dadurch gekennzeichnet, dass** die Halterung (33) mit der metallischen Schutzhülse (15) stoffschlüssig verbunden, insbesondere verschweißt ist.

9. Kabeldurchführung nach einem der Ansprüche 1 bis 8, **dadurch gekennzeichnet, dass** die metallische Schutzhülse (15) becherförmig ausgebildet ist und zumindest eine Durchgangsöffnung (154) im Boden der becherförmigen metallischen Schutzhülse (15) ausgebildet ist, durch die das mindestens eine Anschlusskabel (21) hindurchgeführt ist und wobei das thermoplastisch verarbeitbare, fluorpolymerhaltige Material (31) zumindest teilweise im Bereich der Durchgangsöffnung (152) im Boden der becherförmigen metallischen Schutzhülse (15) ausgebildet ist.

10. Kabeldurchführung nach einem der Ansprüche 1 bis 9, **dadurch gekennzeichnet, dass** die Kabeldurchführung (30) ein von der metallischen Schutzhülse (15) separates Führungsstück (34) zur zumindest seitlichen Führung des mindestens einen Anschlusskabels (21) aufweist, wobei das thermoplastisch verarbeitbare, fluorpolymerhaltige Material (31) zumindest teilweise axial und/oder lateral zwischen dem Führungsstück (34) und der metallischen Schutzhülse (15) angeordnet ist.

11. Kabeldurchführung nach Anspruch 10, **dadurch gekennzeichnet, dass** das Führungsstück (34) scheibenförmig ausgebildet ist und zumindest eine Loch (341) aufweist, durch die das mindestens einen Anschlusskabel (21) hindurchgeführt ist, wobei das thermoplastisch verarbeitbare, fluorpolymerhaltigen Material (31) zumindest teilweise im Bereich des Lochs (341) des Führungsstücks (34) angeordnet ist.

12. Kabeldurchführung nach Anspruch 10, **dadurch gekennzeichnet, dass** das Führungsstück (34) becherförmig ausgebildet ist und sein Boden (342) zumindest ein Loch (341) aufweist, durch das das mindestens einen Anschlusskäbel (21) hindurchgeführt ist, wobei das thermoplastisch verarbeitbare, fluorpolymerhaltige Material (21) zumindest teilweise im Inneren des becherförmigen Führungsstücks (34) angeordnet ist und das becherförmige Führungsstücks (34) mit seiner offenen Seite über die Stirnseite (32) der metallischen Schutzhülse (15) geschoben ist.

13. Kabeldurchführung nach einem der Ansprüche 10 bis 12, **dadurch gekennzeichnet, dass** das Führungsstück durch das thermoplastisch verarbeitbare, fluorpolymerhaltigen Material (31) mit der metallischen Schutzhülse (15) stoffschlüssig verbunden ist.

14. Abgassensor, umfassend einen Gehäusekörper (12), auf dessen dem Abgas abgewandter Seite eine Kabeldurchführung (30) nach einem der Ansprüche 1 bis 13 angeordnet, insbesondere verbunden, bevorzugt verschweißt, ist.

15. Verfahren zur Herstellung einer Kabeldurchführung (30) nach einem der Ansprüche 1 bis 13 oder eines Abgassensors (1) nach Anspruch 14, **gekennzeichnet durch** das Einbringen des thermoplastisch verarbeitbaren fluorpolymerhaltigen Materials (31) in den zwischen der metallischen Schutzhülse (15) und dem zumindest einen Anschlusskabel (21) befindlichen Raum in verflüssigter Form, wodurch die insgesamt stoffschlüssige Abdichtung zwischen dem Anschlusskabel (21) und der metallischen Schutzhülse (15) mittelbar durch das thermoplastisch verarbeitbare fluorpolymerhaltige Material (31) hergestellt wird.

## Claims

1. Cable bushing for sealing and electrically contacting an exhaust-gas sensor (1), comprising a metal protective sleeve (15) and comprising at least one connection cable (21), which is led out of the metal protective sleeve (15) on at least one end face (32) of the metal protective sleeve (15), **characterized in that** at least one cross section of the space located between the metal protective sleeve (15) and the at least one connection cable (21) is filled with a thermoplastically processable fluoropolymer-containing material (31), wherein an altogether material-bonded sealing takes place between the connection cable (21) and the metal protective sleeve (15) indirectly by the thermoplastically processable fluoropolymer-containing material (31).

2. Cable bushing according to Claim 1, **characterized in that** the thermoplastically processable, fluoropolymer-containing material (31) comprises at least a perfluoroalkoxy polymer or a tetrafluoroethyleneperfluoropropylene or a polychlorotrifluoroethylene or a polyvinylidene fluoride or consists of perfluoroalkoxy polymer or tetrafluoroethyleneperfluoropropylene or a polychlorotrifluoroethylene or polyvinylidene fluoride or a mixture of these materials.

3. Cable bushing according to either of Claims 1 and 2, **characterized in that** the thermoplastically processable fluoropolymer-containing material (31) has a melting point or melting range between 170°C and 320°C, in particular at least 260°C.

4. Cable bushing according to one of Claims 1 to 3, **characterized in that** the thermoplastically processable, fluoropolymer-containing material (31) is homogeneously formed.

5. Cable bushing according to one of Claims 1 to 4, **characterized in that** the thermoplastically processable, fluoropolymer-containing material (31) is introduced in a liquid state into the space located between the metal protective sleeve (15) and the at least one connection cable (21), in particular by injection moulding or by immersion.

6. Cable bushing according to one of Claims 1 to 4, **characterized in that** the thermoplastically processable, fluoropolymer-containing material (31) is introduced in a solid state into the space located between the protective sleeve and the at least one connection cable (21) and is subsequently melted.

7. Cable bushing according to one of Claims 1 to 6, **characterized in that** it has a holder (33), which is preferably made of metal and serves for laterally and/or axially holding the at least one connection cable, in particular laterally and/or axially fixing the at least one connection cable (21), and/or for supporting the thermoplastically processable, fluoropolymer-containing material (31) in the axial direction.

8. Cable bushing according to Claim 7, **characterized in that** the holder (33) is connected to the metal protective sleeve (15) in a material-bonded manner, in particular is welded.

9. Cable bushing according to one of Claims 1 to 8, **characterized in that** the metal protective sleeve (15) is formed in the shape of a cup and at least one through-opening (154) is formed in the bottom of the cup-shaped metal protective sleeve (15), through which the at least one connection cable (21) is led, and wherein the thermoplastically processable, fluoropolymer-containing material (31) is at least partially formed in the region of the through-opening (152) in the bottom of the cup-shaped metal protective sleeve (15).

10. Cable bushing according to one of Claims 1 to 9, **characterized in that** the cable bushing (30) has a guide piece (34) separate from the metal protective sleeve (15), for at least partially guiding the at least one connection cable (21), wherein the thermoplastically processable, fluoropolymer-containing material (31) is arranged at least partially axially and/or laterally between the guide piece (34) and the metal protective sleeve (15).

11. Cable bushing according to Claim 10, **characterized in that** the guide piece (34) is formed in the shape of a disc and has at least one hole (341), through which the at least one connection cable (21) is led, wherein the thermoplastically processable, fluoropolymer-containing material (31) is at least partially arranged in the region of the hole (341) of the guide piece (34).

12. Cable bushing according to Claim 10, **characterized in that** the guide piece (34) is formed in the shape of a cup and its bottom (342) has at least one hole (341), through which the at least one connection cable (21) is led, wherein the thermoplastically processable, fluoropolymer-containing material (21) is at least partially arranged inside the cup-shaped guide piece (34) and the cup-shaped guide piece (34) is pushed with its open side over the end face (32) of the metal protective sleeve (15).

13. Cable bushing according to one of Claims 10 to 12, **characterized in that** the guide piece is connected to the metal protective sleeve (15) in a material-bonded manner by the thermoplastically processable, fluoropolymer-containing material (31).

14. Exhaust-gas sensor, comprising a housing body (12), on the side of which facing away from the exhaust gas a cable bushing (30) according to one of Claims 1 to 13 is arranged, in particular connected, preferably welded.

15. Method for producing a cable bushing (30) according to one of Claims 1 to 13 or an exhaust-gas sensor (1) according to Claim 14, **characterized by** introducing the thermoplastically processable fluoropolymer-containing material (31) in a liquefied form into the space located between the metal protective sleeve (15) and the at least one connection cable (21), whereby the altogether material-bonded sealing between the connection cable (21) and the metal protection sleeve (15) is produced indirectly by the thermoplastically processable fluoropolymer-containing material (31).

## Revendications

1. Passe-câble servant à l'étanchéification et à la mise en contact électrique d'un capteur de gaz d'échappement (1), comprenant une gaine de protection métallique (15) et au moins un câble de raccordement (21) qui est guidé hors de la gaine métallique (15) au niveau d'au moins une face frontale (32) de la gaine de protection métallique (15),
**caractérisé en ce qu'**au moins une section transversale de l'espace situé entre la gaine de protection métallique (15) et ledit au moins un câble de raccordement (21) est remplie d'un matériau (31) contenant un fluoropolymère et pouvant être traité par voie thermoplastique, dans lequel une étanchéification totale par complémentarité de matériau est réalisée indirectement entre le câble de raccordement (21) et la gaine de protection métallique (15) par le matériau (31) contenant un fluoropolymère et pouvant être traité par voie thermoplastique.

2. Passe-câble selon la revendication 1, **caractérisé en ce que** le matériau (31) contenant un fluoropolymère et pouvant être traité par voie thermoplastique comprend au moins un polymère perfluoroalcoxy ou un tétrafluoroéthylèneperfluoroproylène ou un polychlorotrifluoroéthylène ou un polyfluorure de vinylidène ou est constitué d'un polymère perfluoroalcoxy ou de tétrafluoroéthylèneperfluoroproylène ou de polychlorotrifluoroéthylène ou de polyfluorure de vinylidène ou d'un mélange de ces matériaux.

3. Passe-câble selon l'une des revendications 1 ou 2, **caractérisé en ce que** le matériau (31) contenant un fluoropolymère et pouvant être traité par voie thermoplastique présente un point de fusion ou une plage de fusion se situant entre 170°C et 320°C, en particulier d'au moins 260°C.

4. Passe-câble selon l'une des revendications 1 à 3, **caractérisé en ce que** le matériau (31) contenant un fluoropolymère et pouvant être traité par voie thermoplastique se présente sous une forme homogène.

5. Passe-câble selon l'une des revendications 1 à 4, **caractérisé en ce que** le matériau (31) contenant un fluoropolymère et pouvant être traité par voie thermoplastique est introduit sous forme liquide dans l'espace situé entre la gaine de protection métallique (15) et ledit au moins un câble de raccordement (21), en particulier par moulage par injection ou par immersion.

6. Passe-câble selon l'une des revendications 1 à 4, **caractérisé en ce que** le matériau (31) contenant un fluoropolymère et pouvant être traité par voie thermoplastique est introduit sous forme solide dans l'espace situé entre la gaine de protection et ledit au moins un câble de raccordement (21) et est ensuite fondu.

7. Passe-câble selon l'une des revendications 1 à 6, **caractérisé en ce qu'**il comporte un support (33), de préférence réalisé sous forme métallique, servant à maintenir latéralement et/ou axialement ledit au moins un câble de raccordement, en particulier pour la fixation latérale et/ou axiale dudit au moins un câble (21) et/ou pour supporter en direction axiale le matériau (31) contenant un fluoropolymère et pouvant être traité par voie thermoplastique.

8. Passe-câble selon la revendication 7, **caractérisé en ce que** le support (33) est relié à la gaine de protection métallique (15) par complémentarité de matériau, et est en particulier soudé.

9. Passe-câble selon l'une des revendications 1 à 8, **caractérisé en ce que** la gaine de protection métallique (15) est réalisée en forme de godet et **en ce qu'**au moins une ouverture de passage (154) est réalisée dans le fond de la gaine de protection métallique (15) en forme de godet, à travers laquelle est amené à passer ledit au moins un câble de raccordement (21) et dans lequel le matériau (31) contenant un fluoropolymère et pouvant être traité par voie thermoplastique est réalisé au moins partiellement dans la zone de l'ouverture de passage (152) dans le fond de la gaine de protection métallique (15) en forme de godet.

10. Passe-câble selon l'une des revendications 1 à 9, **caractérisé en ce que** le passe-câble (30) comporte une pièce de guidage (34) séparée de la gaine métallique (15) pour au moins un guidage latéral dudit au moins un câble de raccordement (21),
dans lequel le matériau (31) contenant un fluoropolymère et pouvant être traité par voie thermoplastique est disposé au moins partiellement axialement et/ou latéralement entre la pièce de guidage (34) et la gaine de protection métallique (15).

11. Passe-câble selon la revendication 10, **caractérisé en ce que** la pièce de guidage (34) est réalisée sous la forme d'un disque et présente au moins un trou (341) à travers lequel ledit au moins un câble de raccordement (21) est amené à passer, dans lequel le matériau (31) contenant un fluoropolymère et pouvant être traité par voie thermoplastique est disposé au moins partiellement dans la zone du trou (341) de la pièce de guidage (34).

12. Passe-câble selon la revendication 10, **caractérisé en ce que** la pièce de guidage (34) est réalisée sous la forme d'un godet et **en ce que** son fond (342) comporte au moins un trou (341) dans lequel ledit au moins un câble de raccordement (21) est amené à passer, dans lequel le matériau (21) contenant un fluoropolymère et pouvant être traité par voie thermoplastique est disposé au moins partiellement à l'intérieur de la pièce de guidage (34) en forme de godet et la pièce de guidage (34) en forme de godet est repoussée de manière à ce que son côté ouvert se trouve sur la face frontale (32) de la gaine de protection métallique (15).

13. Passe-câble selon l'une des revendications 10 à 12, **caractérisé en ce que** la pièce de guidage est reliée par complémentarité de matériau à la gaine de protection métallique (15) par le matériau (31) contenant un fluoropolymère et pouvant être traité par voie thermoplastique.

14. Capteur de gaz d'échappement, comprenant un corps de boîtier (12), sur le côté duquel qui est tourné à l'opposé des gaz d'échappement, est disposé, en particulier connecté, et de préférence soudé, un passe-câble (30) selon l'une des revendications 1 à 13.

15. Procédé de fabrication d'un passe-câble (30) selon l'une des revendications 1 à 13 ou d'un capteur de gaz d'échappement (1) selon la revendication 14, **caractérisé par** l'introduction du matériau (31) contenant un fluoropolymère et pouvant être traité par voie thermoplastique, sous forme liquide, dans l'espace situé entre la gaine de protection métallique (15) et ledit au moins un câble de raccordement (21), de sorte que l'étanchéification totale entre le câble de raccordement (21) et la gaine de protection métallique (15) est produite indirectement par le matériau (31) contenant un fluoropolymère et pouvant être traité par voie thermoplastique.
